# EUROPEAN PATENT SPECIFICATION

(11) **EP 3 051 733 B1**
(45) Date of publication and mention of the grant of the patent: **07.11.2018**
(21) Application number: 15305090.1
(22) Date of filing: 27.01.2015
(51) Int. Cl.: H04L 1/18, H04L 1/00

(54) **Method for resource management, a node, a network and a computer program product**
Verfahren zur Ressourcenverwaltung, Knoten, Netzwerk und Computerprogrammprodukt
Procédé de gestion de ressources, noeud, réseau et programme informatique

(43) Date of publication of application: 03.08.2016
(73) Proprietor: Alcatel Lucent, 91620 Nozay (FR)
(72) Inventor: Sama, Ritu, 560045 Bangalore (IN); Kanogovi, Satish, 560045 Bangalore (IN)
(74) Representative: Nokia EPO representatives

(56) References cited:
- WO-A1-2012/052911
- NOKIA ET AL: "D2D Communication within network coverage", 3GPP DRAFT; R1-133494, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716601, Retrieved from the Internet: URL:http://www.3gpp.org/ftp/tsg_ran/WG1_RL 1/TSGR1_74/Docs/ [retrieved on 2013-08-10]
- INTERDIGITAL: "D2D Communication in LTE", 3GPP DRAFT; R1-132188, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697960, Retrieved from the Internet: URL:http://www.3gpp.org/ftp/tsg_ran/WG1_RL 1/TSGR1_73/Docs/ [retrieved on 2013-05-11]

## Description

### TECHNICAL FIELD

Aspects relate, in general, to a method for resource management, a node in a wireless telecommunication network, a network and a computer program product.

### BACKGROUND

Typically, in wireless networks, such as wireless cellular networks for example, a communication path between two devices can traverse multiple network elements such as base station nodes, packet gateways and Internet switches/routers and so on. In contrast, direct link communication or Device to Device (D2D) communication involves exchange of data between devices using a direct communication link.

D2D communication can be implemented using the LTE air link in a licensed cellular spectrum with an LTE node eNB (eNodeB) providing assistance for managing the resources that get allocated for the D2D communication as well as for regular network routed links.

Document WO 2012/052911 A1 and document NOKIA ET AL: "D2D Communication within network coverage",3GPP DRAFT; R1-133494, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. Barcelona, Spain; (2013-08-10) discloses different scenarios of network assisted D2D communication.

### SUMMARY

According to an example, there is provided a method as claimed in claim 1. The acknowledgement message can be an acknowledgement of receipt or non-receipt, at the first or second device, of data transmitted by the second or first device. The allocated set of resource blocks can be maintained in the absence of receipt of the acknowledgement message at the node. The predetermined period of time can be terminated on receipt of the acknowledgement message at the node. The allocated set of resource blocks can be released for the first and second devices at or after the end of the predetermined period of time. The allocated set of resource blocks for the first and second devices can be released. A request can be transmitted from the first or second device to the node for a D2D communication session between the devices.

According to an example, there is provided a node as claimed in claim 7. The node can maintain the allocated set of resource blocks in the absence of receipt of the acknowledgement message. The node can release the allocated set of resource blocks on receipt of the acknowledgement message.

According to an example, there is provided a wireless telecommunication network as claimed in claim 10.

According to an example, there is provided a computer program product as claimed in claim 11.

### BRIEF DESCRIPTION OF THE DRAWINGS

Embodiments will now be described, by way of example only, with reference to the accompanying drawings, in which:
Figure 1 is a schematic representation of a system according to an example;
Figure 2 is a flow chart of a method according to an example;
Figure 3 is a flow chart of a method according to an example;
Figure 4 is a schematic representation of a process flow according to an example, which represents a situation in which the transmitting UE is relays an ACK message to the node;
Figure 5 is a schematic representation of a process flow according to an example, which represents a situation in which there is a NACK from a receiving UE to a transmitting UE;
Figure 6 is a schematic representation of a process flow according to an example, which represents a situation in which there is an ACK from a receiving UE to a transmitting UE;
Figure 7 is a schematic representation of a process flow according to an example, which represents a situation in which there is an NACK from a receiving UE to a transmitting UE;
Figure 8 is a schematic representation of a process flow according to an example, which represents a situation in which there is an ACK from a receiving UE to a transmitting UE;
Figure 9 is a schematic representation of a process flow according to an example, which represents a situation in which there is a NACK from a receiving UE to a transmitting UE;
Figure 10 is a schematic representation of a process flow according to an example, which represents a situation in which there is an ACK from a receiving UE to a transmitting UE; and
Figure 11 is a schematic representation of a process flow according to an example, which represents a situation in which there is a NACK from a receiving UE to a transmitting UE.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

In regular network routed LTE communications, since an eNB is also the source or the sink for data transmitted or received from user equipment (UE), it is aware of the success or failure of transmissions and can use this information to schedule resources for D2D communication accordingly. For example, an eNB Scheduler can maintain allocated resources for the particular cellular link between the two UEs in case retransmission is needed in the case of message failure, or can return resources for use with other UEs.

In the special context of LTE for example, the resource allocation in direct D2D connection or cellular based connection will include radio resources between the two communicating entities. Here radio resources are primarily the physical resource blocks (PRBs). The scheduling of these PRBs is based on information like modulation and coding scheme (MCS), transmit power capacity of the communicating entities and so on. For LTE based cellular communication, an eNodeB has a controlling and decision making function in allocating/scheduling these radio resources based on the radio capability of the communicating entities and the link condition between these entities which is also determined based on a regular feedback for each packet transferred at the air/radio interface.

However, the scheduler (eNB) is neither the source nor the sink for any data exchanged between UEs engaged in D2D communications, and hence typically needs additional information from the UEs in question in order to be able to undertake resource allocation decisions. In the context of D2D communications, it is desirable to minimize the participation or handshake with a scheduler device to ascertain that minimum radio resources are used with the cellular network apart from what is necessary for scheduling from the eNB end.

HARQ signalling messages (hybrid automatic repeat request messages) can be used between a UE and a node of a wireless telecommunication network that is operable to manage the resources between the UEs in D2D communication. HARQ is a known error-control method for data transmission that uses acknowledgements and timeouts to achieve reliable data transmission. For example, typically, if a sender does not receive an acknowledgment before the timeout, it usually re-transmits the frame/packet until the sender receives an acknowledgment or exceeds a predefined number of re-transmissions.

Typical HARQ procedures therefore mean that a UE will transmit multiple messages at high power, and typically higher power than is required (or desired) for D2D communications however.

According to an example, a more efficient information exchange between UEs in D2D communication and a node of a wireless telecommunication network that is operable to manage the resources between the UEs can be provided using an extension of HARQ signalling messages.

In an example, a selective relayed feedback (HARQ) message can be transmitted to a node for network assisted D2D communication. The feedback can be from the transmitting or receiving device.

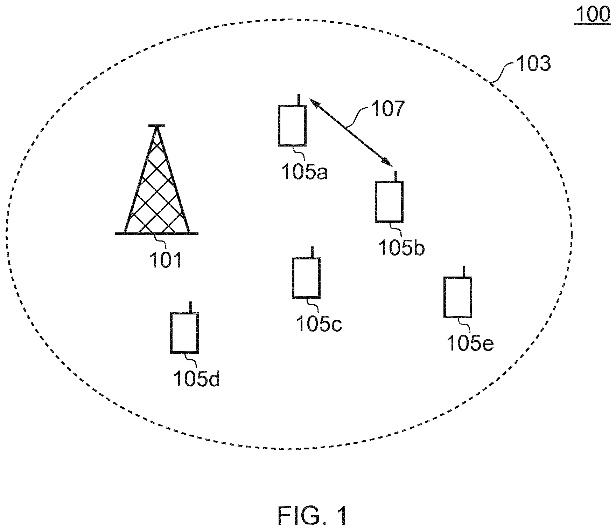

Figure 1 is a schematic representation of a system according to an example. In a wireless telecommunications network 100, a node 101, such as an eNB for example, provides cellular network coverage over an area (cell) 103. UEs 105a-e are within the coverage range of the node 101. One UE 105a (T-UE) transmits data to another UE 105b (R-UE) over a D2D link 107 for which resource scheduling is performed by the node 101.

Typically, for D2D communications between devices, HARQ operates on the basis that an acknowledgement message indicating successful reception of data (ACK) is provided to the node managing resources between the D2D devices. Similarly, a message indicating unsuccessful reception of data (NACK) can be provided to the node managing resources between the D2D devices. In either case, the node is made aware, by way of additional information from one of the devices involved in the D2D communication, of the success or otherwise of the reception of a message at a receiving device of the pair of D2D devices.

In network assisted D2D communication since the receiving entity in the uplink is not the node, the provision of HARQ feedback which is always sent to the node obviates one of the advantages of D2D communication, which promises to achieve a faster link with lower power use at the UEs in question. Accordingly, by selectively sending feedback to the node, the impact on UE power is minimized.

According to an example, the node 101 includes a scheduler (not shown) that is operable to implicitly assume an ACK when there is no feedback. The R-UE only relays NACK feedback to the node 101.

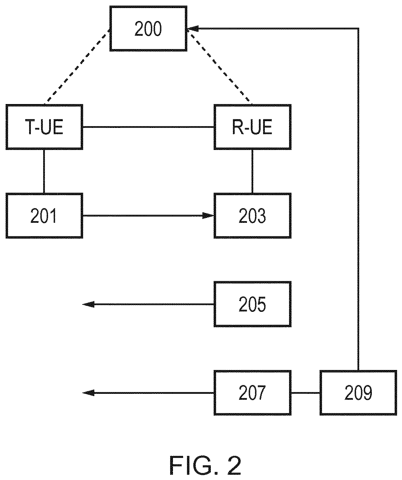

Figure 2 is a flow chart of a method according to an example. A pair of UE devices, T-UE and R-UE, are engaged in D2D communications. T-UE transmits data to another R-UE over a D2D link established between the two. In block 201 T-UE transmits a data packet to R-UE. In block 203 R-UE successfully decodes the received packet and sends back a HARQ feedback (ACK) to T-UE in block 205. R-UE does not send any feedback to the node 200 managing the resources for the D2D link between the devices.

The node 200 implicitly assumes an ACK message has been received when it does not receive any feedback within a predetermined period of time of the scheduled transmission. For example, if no feedback is received at the node 200 within 4 TTIs of the scheduled transmission, the node 200 assumes reception of an ACK message.

In the case that R-UE does not successfully decode the packet, it sends a NACK to T-UE in block 207. R-UE also sends a NACK to node 200 in block 209. Node 200 uses the NACK information received to determine whether it needs to contribute to the current resource allocation of the D2D link, such as to allow for retransmissions from T-UE.

In good air link conditions between the proximate UEs (T-UE and R-UE), one can expect more ACKs than NACKs. Hence this mechanism leads to a reduction in overhead of additional HARQ feedback signalling performed with the node in question.

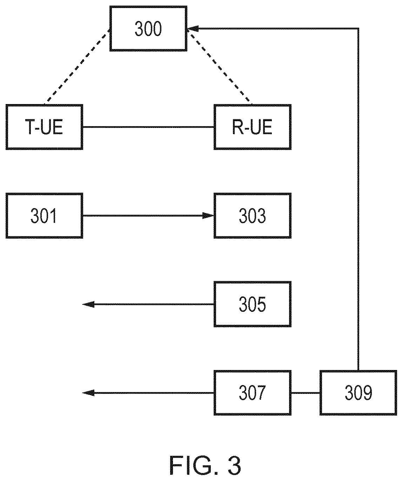

An alternative mechanism is enabled by enhancing logic at the node scheduler to implicitly assume an NACK when there is no feedback. That is, the R-UE only relays ACK feedback to node. Figure 3 is a flow chart of a method according to an example.

Similarly to figure 2, T-UE sends data packet to R-UE in block 301. In the example of figure 3, R-UE does not successfully decode the received packet (block 303). Thus, RUE sends back the HARQ feedback (NACK) to T-UE in block 305. However, R-UE does not send any feedback to the node 300 managing the resources for the D2D link between the devices. The node 300 implicitly assumes a NACK when it does not receive any feedback within a predetermined period of time of the scheduled transmission. For example, if no feedback is received at the node 300 within 4 TTIs (Transmission Time Interval) of the scheduled transmission, the node 300 assumes reception of a NACK message. Accordingly, the node can retain the resources for the D2D Link. A time limit for feedback, such as 4 TTIs, can be adjusted as desired, and the above is not intended to be limiting. For example, a selected time for feedback can be any value, such as a value selected from 1- 1000 TTIs, or even smaller or larger, and so on, as desired.

In the case that R-UE does successfully decode the packet, it sends an ACK to T-UE in block 307. R-UE also sends a ACK to node 300 in block 309. The node 300 uses the ACK information received to determine that it can relinquish the current resource allocation for the D2D link in order to allow those resources to be used for other UEs waiting to be scheduled for example.

In poor air link conditions between the proximate UEs (T-UE and R-UE), one can expect more NACKs than ACKs. Hence this mechanism leads to reduction in overhead of additional HARQ feedback signalling performed with the node.

A further example of the two mechanisms indicated above is that the feedback can be relayed to the node by the T-UE, rather than the R-UE, on determination that the T-UE is closer. That is, if T-UE is closer to the node managing the resources it may require less power to transmit a signal (ACK/NACK and so on) to reach the node.

Typically, in the case of a D2D direct data link, the two devices will be transmitting at a lower power as compared to the power that would have been required if the communication used the cellular infrastructure. This is primarily because of the proximity of the two devices to one other. In an example, which device selectively sends feedback to the node can be preconfigured. For example, it can be based on L3 messaging between UE and the node. Also, whether ACK or NACK messages need to be relayed as feedback to the node can be preconfigured, and again can be based on L3 messaging between UE and node in question.

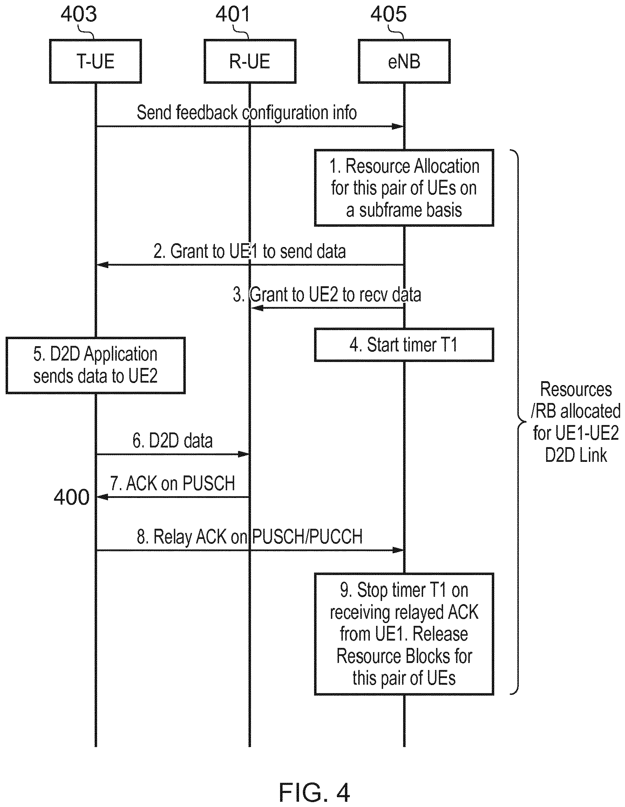

The following describes various examples in which feedback can be selectively relayed by a selected UE in a D2D link. Whether ACK or NACK is relayed and which UE relays the feedback can be communicated to a node prior to data transfer either as part of a new signaling message or by adding an information element to existing signaling messages between a UE and a node. The following examples are applicable for both dynamic and semi-persistent scheduling in, for example, an LTE based network assisted device to device communication. Reference is made hereinafter to an eNB, which is more generally a node of the system as described with reference to figure 1 for example. In a D2D communication session, a pair of UEs - a transmitting UE and a receiving UE - communicate over a D2D link. The resources for the link are managed using an eNB (node). Figures 4 to 11 are schematic representations of message flows for various ones of the examples described below.

### Relayed ACK from the transmitting UE to eNB:

In an example, depicted schematically in figure 4, which represents a situation in which the transmitting UE is relays an ACK message to the node, an ACK 400 can be transmitted from the receiving UE 401 to the transmitting UE 403 in a direct device to device communication link. When the eNB 405 schedules or allocates radio resources for this D2D link pair, it can start a timer T1 on expiry of which the data packet meant for the direct link is dropped at the transmitting UE (not scheduled by eNB for any further retransmissions). In this case, it is already configured that only the ACK will be relayed to the eNB by the transmitting UE. Hence the transmitting UE will relay the ACK to the eNB on successful reception of ACK from the receiving UE. The eNB will clear the radio resources on receiving the ACK and stop timer T1.

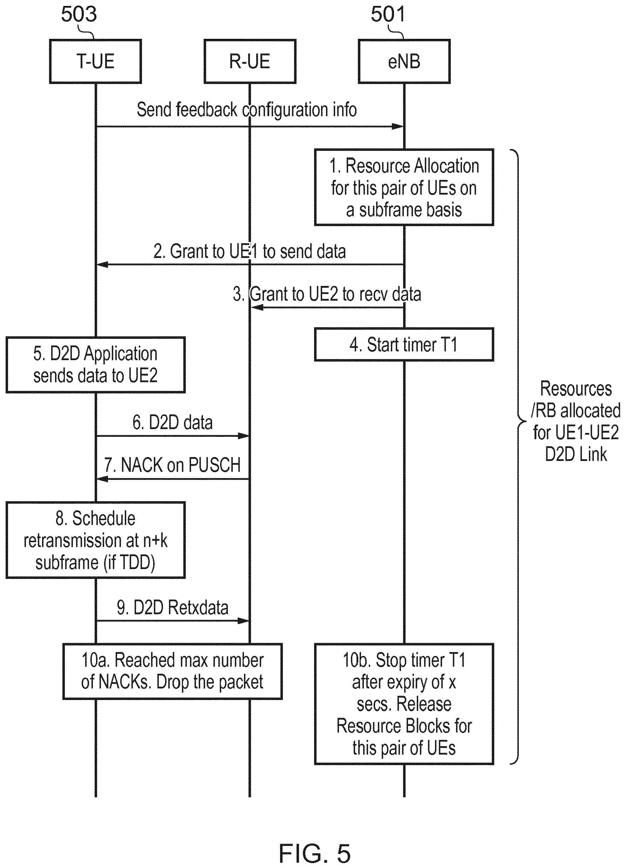

In an example, depicted schematically in figure 5, which represents a situation in which there is a NACK from the receiving UE to the transmitting UE in a direct D2D communication, the ENB 501 can schedule resources or allocates radio resources for this D2D link pair. It can start a timer T1 on the expiry of which the data packet meant for the direct link is dropped (not scheduled for any further retransmissions). In this case, it is already configured that only the ACK will be relayed to the eNB 501 by the transmitting UE 503. The NACK will not be relayed and the eNB 501 will clear the radio resources on the expiry of timer T1.

### Relayed ACK from the receiving UE to eNB:

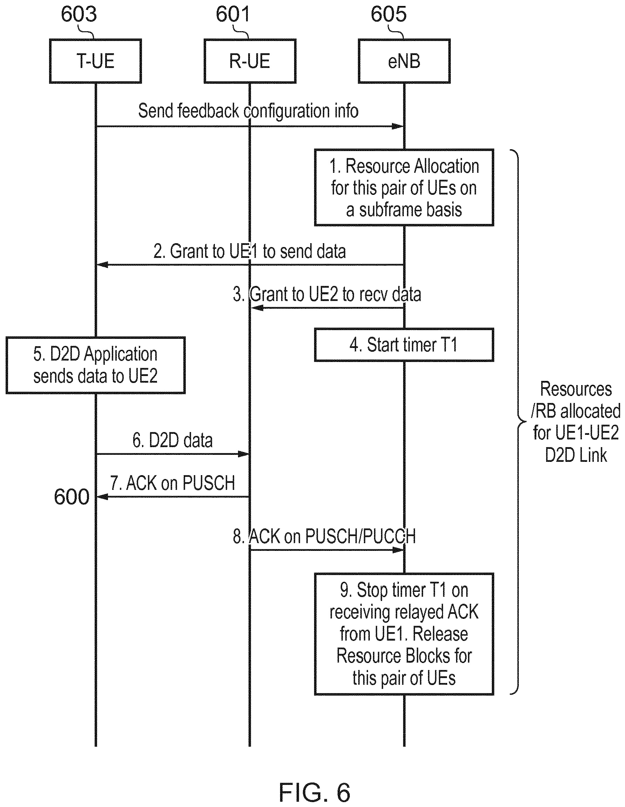

In an example, depicted schematically in figure 6, which represents a situation in which there is an ACK 600 from the receiving UE 601 to the transmitting UE 603 in a D2D communication, when the ENB 605 schedules or allocates radio resources for this D2D link pair, it will start a timer T1 on the expiry of which the data packet meant for the direct link is dropped at the transmitting UE (not scheduled for any further retransmissions). In this case, it is already configured that only the ACK 600 will be relayed to the eNB by the receiving UE 601. Hence the receiving UE will relay the ACK to the eNB on successful reception of the data packet from the transmitting UE. The eNB will clear the radio resources on receiving the ACK and stop timer T1.

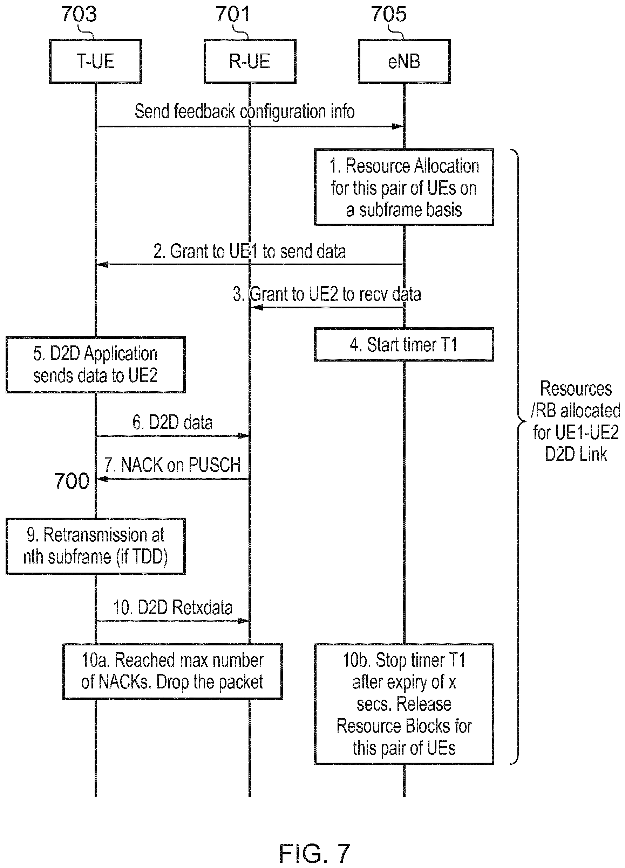

In an example, depicted schematically in figure 7, which represents a situation in which there is an NACK 700 from the receiving UE 701 to the transmitting UE 703 in a D2D communication, when the ENB 705 schedules or allocates radio resources for this D2D link pair, it will start a timer T1 on the expiry of which the data packet meant for the direct link is dropped at the transmitting UE (not scheduled for any further retransmissions). In this case, it is already configured that only the ACK 700 will be relayed to the eNB by the receiving UE. The NACK will not be relayed to the eNB. The eNB will clear the radio resources after the expiry of timer T1.

### Relayed NACK from the transmitting UE to eNB:

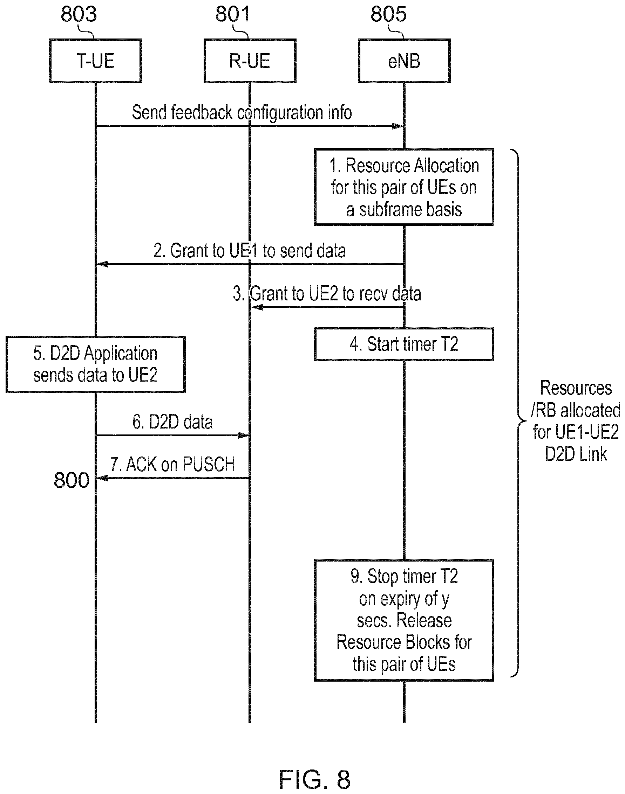

In an example, depicted schematically in figure 8, which represents a situation in which there is an ACK 800 from the receiving UE 801 to the transmitting UE 803 in a D2D communication, when the eNB 805 schedules or allocates radio resources for this D2D link pair, it will start a timer T2 on the expiry of which the data packet meant for the direct link is dropped at the transmitting UE (not scheduled for any further retransmissions). In this case, it is already configured that only the NACK will be relayed to the eNB by the transmitting UE. The ACK will not be relayed to the eNB. The eNB will hold the radio resources till the expiry of timer T2.

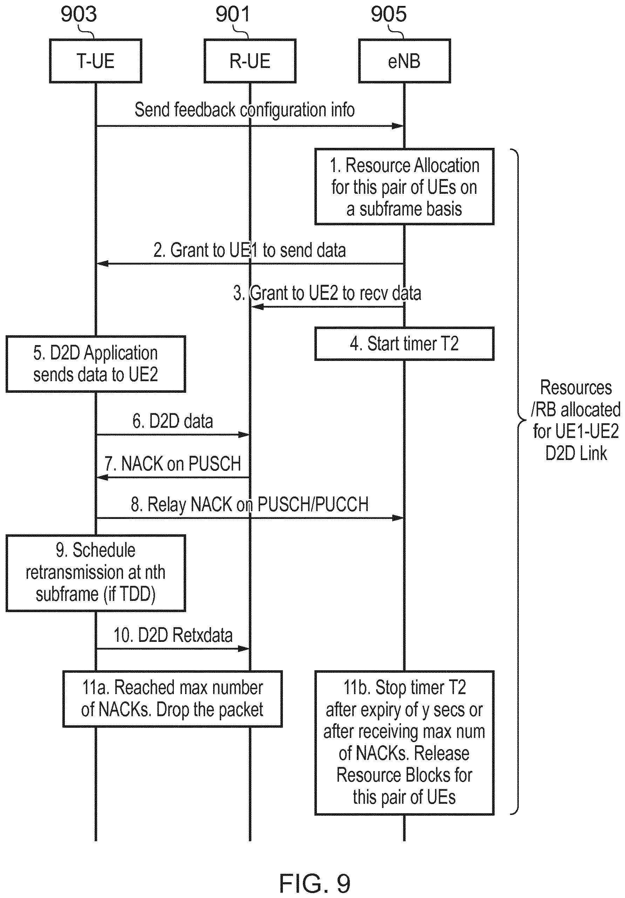

In an example, depicted schematically in figure 9, which represents a situation in which there is a NACK 900 from the receiving UE 901 to the transmitting UE 903 in a D2D communication, when the eNB 905 schedules or allocates radio resources for this D2D link pair, it will start a timer T2 on the expiry of which the data packet meant for the direct link is dropped at the transmitting UE (not scheduled for any further retransmissions). In this case, it is already configured that only the NACK will be relayed to the eNB by the transmitting UE. Hence the transmitting UE will relay the NACK to the eNB on reception of NACK from the receiving UE. The eNB will hold the radio resources on receiving the NACK. In this case, as there is no ACK, hence the ENB clears the radio resources on the expiry of timer T2.

### Relayed NACK from the receiving UE to eNB:

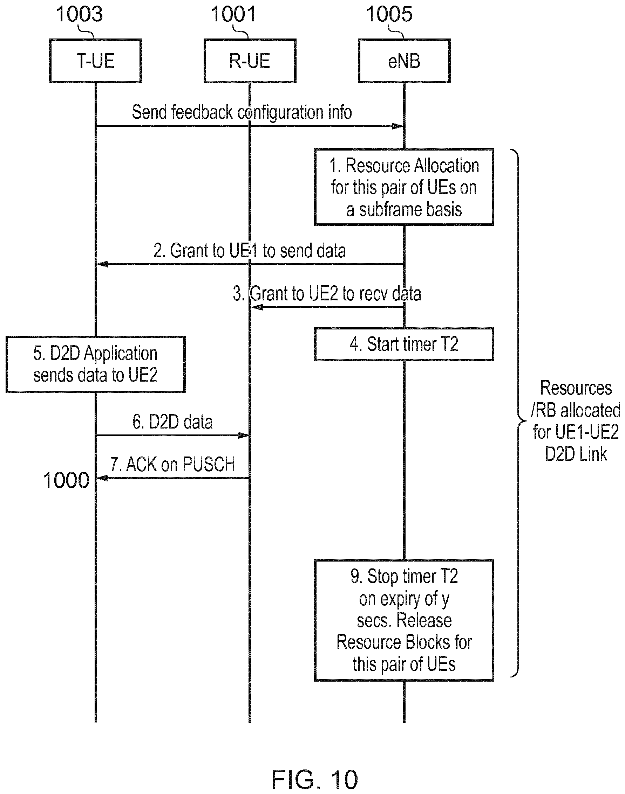

In an example, depicted schematically in figure 10, which represents a situation in which there is an ACK 1000 from the receiving UE 1001 to the transmitting UE 1003 in a D2D communication, when the eNB 1005 schedules or allocates radio resources for this D2D link pair, it will start a timer T2 on the expiry of which the data packet meant for the direct link is dropped at the transmitting UE (not scheduled for any further retransmissions). In this case, it is already configured that only the NACK will be relayed to the eNB by the receiving UE. The ACK will not be relayed. The radio resources will be cleared only after the expiry of timer T2.

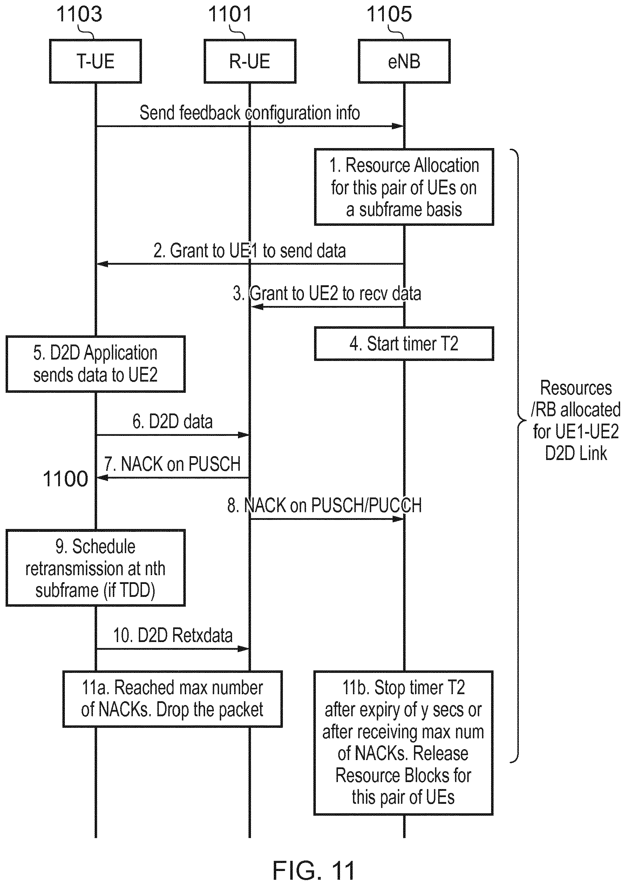

In an example, depicted schematically in figure 11, which represents a situation in which there is a NACK 1100 from the receiving UE 1101 to the transmitting UE 1103 in a D2D communication, when the eNB 1105 schedules or allocates radio resources for this D2D link pair, it will start a timer T2 on the expiry of which the data packet meant for the direct link is dropped at the transmitting UE (not scheduled for any further retransmissions). In this case, it is already configured that only the NACK will be relayed to the eNB by the receiving UE. Hence the receiving UE will relay the NACK to the eNB on failure to receive the D2D data packet from the transmitting UE. The eNB will hold the radio resources on receiving the NACK. The radio resources will be cleared only after the expiry of timer T2.

The timer T1 is started by the ENB and it will decide the duration for which the ENB has to hold the radio resources for this D2D link pair before an ACK is received from one of the UEs.

The timer T2 is started by the eNB and it will decide the duration for which the eNB has to hold the radio resources for this D2D link pair for a D2D data packet transfer between the two UEs.

In the case when the R-UE sends the feedback to the eNB, it will power the feedback to both the other UE and eNB at the same power on PUCCH/PUSCH. This is because sending to eNB may require a higher power based on the UE's proximity from the eNB.

The present inventions can be embodied in other specific apparatus and/or methods. The described embodiments are to be considered in all respects as illustrative and not restrictive. In particular, the scope of the invention is indicated by the appended claims.

## Claims

1. A method, in a wireless telecommunication network, for resource management for device-to-device, D2D, communication between first and second devices, the method including:
relaying either a positive acknowledgement message or a negative acknowledgement message by one of the first or second devices to a node of the network, said messages having been transmitted/received in the D2D communication between the first and second devices, and being related to success or failure of a data message sent between the first and second devices in the D2D communication,
wherein the one of the first or second devices is configured to relay either only positive acknowledgement messages or only negative acknowledgement messages to the node; maintaining, by the node, an allocated set of resource blocks for the D2D communication until one of: receiving, by the node, a relayed positive acknowledgement message; receiving, by the node, a predetermined maximum number of relayed negative acknowledgement messages; or upon expiration of a predetermined period of time triggered when the set of resource blocks is allocated by the node.

2. A method as claimed in claim 1, wherein the acknowledgement message is an acknowledgement of receipt or non-receipt, at the first or second device, of data transmitted by the second or first device.

3. A method as claimed in claim 1, wherein the allocated set of resource blocks are maintained in the absence of receipt of the relayed positive acknowledgement message at the node.

4. A method as claimed in claim 1, wherein the predetermined period of time is terminated on receipt of the relayed positive acknowledgement message at the node.

5. A method as claimed in claim 1, further comprising releasing the allocated set of resource blocks for the first and second devices upon termination of the predetermined period of time.

6. A method as claimed in any preceding claim, further comprising transmitting a request from the first or second device to the node for a D2D communication session between the devices.

7. A node in a wireless telecommunication network, operable to:
receive either a positive acknowledgement message or a negative acknowledgement message relayed by only one of a first or second device, said messages having been transmitted/received in a D2D communication between the first and second devices and being related to success or failure of a data message sent between the first and second devices in the D2D communication, wherein the node is configured to receive either only positive acknowledgement messages or only negative acknowledgement messages relayed by the one of the first or second devices; and
maintain an allocated set of resource blocks for the D2D communication until one of: the node receiving a relayed positive acknowledgement message; the node receiving a predetermined maximum number of relayed negative acknowledgement messages; or upon expiration of a predetermined period of time triggered when the set of resource blocks is allocated by the node.

8. A node as claimed in claim 7, wherein the node is operable to maintain the allocated set of resource blocks in the absence of receipt of the relayed positive acknowledgement message.

9. A node as claimed in claim 7, wherein the node is operable to release the allocated set of resource blocks on receipt of the relayed positive acknowledgement message.

10. A wireless telecommunication network including:
a node according to claim 7 and
first and second devices in D2D communication, wherein one of the first and second devices is operable to relay to the node either only positive acknowledgement messages or only negative acknowledgement messages, said messages having been transmitted/received in the D2D communication between the first and second devices, and being related to success or failure of a data message sent between the first and second devices in the D2D communication.

11. A computer program product, comprising a computer usable medium having computer readable program code embodied therein, said computer readable program code adapted to be executed to implement a method for performing resource management for device-to-device communication between first and second devices as claimed in any of claims 1 to 6.

## Patentansprüche

1. Verfahren, in einem drahtlosen Telekommunikationsnetzwerk, für die Ressourcenverwaltung für eine D2D-Kommunikation (Device-to-Device) zwischen ersten und zweiten Geräten, wobei das Verfahren umfasst:
Weiterleiten entweder einer positiven Bestätigungsnachricht oder einer negativen Bestätigungsnachricht durch eines der ersten oder zweiten Geräte an einen Knoten des Netzwerks, wobei besagte Nachrichten in der D2D-Kommunikation zwischen den ersten und zweiten Geräten übertragen/empfangen worden sind, und verbunden sind mit Erfolg oder Scheitern einer Datennachricht, die zwischen den ersten und zweiten Geräten in der D2D-Kommunikation gesendet worden ist,
wobei das eine der ersten oder zweiten Geräte konfiguriert ist zum Weiterleiten entweder nur positiver Bestätigungsnachrichten oder nur negativer Bestätigungsnachrichten an den Knoten;
Beibehalten, durch den Knoten, eines zugewiesenen Satzes von Ressourcenblöcken für die D2D-Kommunikation, bis eines auftritt aus:
Empfangen, durch den Knoten, einer weitergeleiteten positiven Bestätigungsnachricht;
Empfangen, durch den Knoten, einer vorbestimmten maximalen Anzahl von weitergeleiteten negativen Bestätigungsnachrichten; oder
Auslösen nach Ablauf eines vorbestimmten Zeitraums, wenn der Satz von Ressourcenblöcken von dem Knoten zugewiesen worden ist.

2. Verfahren nach Anspruch 1, wobei die Bestätigungsnachricht eine Bestätigungsnachricht von Erhalt oder Nichterhalt, an dem ersten oder zweiten Gerät, von Daten ist, die von dem ersten oder zweiten Gerät übertragen worden ist.

3. Verfahren nach Anspruch 1, wobei der zugewiesene Satz von Ressourcenblöcken beibehalten wird in der Abwesenheit des Erhalts der weitergeleiteten positiven Bestätigungsnachricht an dem Knoten.

4. Verfahren nach Anspruch 1, wobei der vorbestimmte Zeitraum bestimmt wird beim Erhalt der weitergeleiteten positiven Bestätigungsnachricht an dem Knoten.

5. Verfahren nach Anspruch 1, weiterhin umfassend das Freigeben des zugewiesenen Satzes von Ressourcenblöcken für die ersten und zweiten Geräte nach Ablaufen des vorbestimmten Zeitraums.

6. Verfahren nach einem beliebigen der vorhergehenden Ansprüche, weiterhin umfassend das Übertragen einer Anforderung von dem ersten oder zweiten Gerät auf den Knoten für eine D2D-Kommunikationssitzung zwischen den Geräten.

7. Knoten in einem drahtlosen Kommunikationsnetzwerk, betreibbar zum:
Empfangen entweder einer positiven Bestätigungsnachricht oder einer negativen Bestätigungsnachricht, die weitergeleitet wurde nur von einem der ersten oder zweiten Geräte, wobei besagte Nachrichten in einer D2D-Kommunikation zwischen den ersten und zweiten Geräten übertragen/empfangen worden sind und verbunden sind mit Erfolg oder Scheitern einer Datennachricht, die zwischen den ersten und zweiten Geräten in der D2D-Kommunikation gesendet worden ist, wobei der Knoten konfiguriert ist zum Empfangen entweder nur positiver Bestätigungsnachrichten oder nur negativer Bestätigungsnachrichten, die weitergeleitet worden sind von einem der ersten und zweiten Geräte; und
Beibehalten eines zugewiesenen Satzes von Ressourcenblöcken für die D2D-Kommunikation, bis eines auftritt aus:
der Knoten empfängt eine weitergeleitete positive Bestätigungsnachricht;
der Knoten empfängt eine vorbestimmte maximale Anzahl von weitergeleiteten negativen Bestätigungsnachrichten; oder
Auslösen nach Ablauf eines vorbestimmten Zeitraums, wenn der Satz von Ressourcenblöcken von dem Knoten zugewiesen worden ist.

8. Knoten nach Anspruch 7, wobei der Knoten betreibbar ist zum Beibehalten des zugewiesenen Satzes von Ressourcenblöcken in der Abwesenheit des Erhalts der weitergeleiteten positiven Bestätigungsnachricht.

9. Knoten nach Anspruch 7, wobei der Knoten betreibbar ist zum Freigeben des zugewiesenen Satzes von Ressourcenblöcken beim Erhalt der weitergeleiteten positiven Bestätigungsnachricht.

10. Drahtloses Kommunikationsnetzwerk, einschließend:
einen Knoten nach Anspruch 7 und erste und zweite Geräte in D2D-Kommunikation, wobei eines der ersten und zweiten Geräte betreibbar ist zum Weiterleiten an den Knoten entweder nur von positiven Bestätigungsnachrichten oder nur von negativen Bestätigungsnachrichten, wobei besagte Nachrichten in der D2D-Kommunikation zwischen den ersten und zweiten Geräten übertragen/empfangen worden sind und verbunden sind mit dem Erfolg oder Scheitern einer Datennachricht, die zwischen den ersten und zweiten Geräten in der D2D-Kommunikations gesendet worden ist.

11. Computerprogramm-Produkt, umfassend ein computerverwendbares Medium, das computerlesbaren Programmcode enthält, wobei besagter computerlesbarer Programmcode ausgelegt ist zum Ausgeführtwerden zum Implementieren eines Verfahrens zum Durchführen einer Ressourcenverwaltung für die D2D-Kommunikation zwischen den ersten und zweiten Geräten nach einem beliebigen der Ansprüche 1 bis 6.

## Revendications

1. Procédé, dans un réseau de télécommunications sans fil, destiné à la gestion de ressources pour une communication de dispositif à dispositif, D2D, entre un premier et un deuxième dispositifs, le procédé comprenant les étapes suivantes :
retransmettre soit un message d'accusé de réception positif soit un message d'accusé de réception négatif par l'un des premier ou deuxième dispositifs à un noeud du réseau, lesdits messages ayant été transmis/reçus dans la communication D2D entre le premier et le deuxième dispositifs, et étant relatifs au succès ou à l'échec d'un message de données envoyé entre le premier et le deuxième dispositifs dans la communication D2D,
ledit premier ou deuxième dispositif étant configuré pour retransmettre soit uniquement les messages d'accusé de réception positif soit uniquement les messages d'accusé de réception négatif au noeud ;
maintenir, par le noeud, un ensemble de blocs de ressource alloué pour la communication D2D jusqu'à ce qu'intervienne l'un des événements suivants :
la réception, par le noeud, d'un message d'accusé de réception positif retransmis ;
la réception, par le noeud, d'un nombre maximal prédéterminé de messages d'accusé de réception négatif retransmis ; ou
l'expiration d'un laps de temps prédéterminé déclenché lorsque l'ensemble de blocs de ressource est alloué par le noeud.

2. Procédé selon la revendication 1, dans lequel le message d'accusé de réception est un accusé de réception ou de non réception, au niveau du premier ou du deuxième dispositif, de données transmises par le deuxième ou le premier dispositif.

3. Procédé selon la revendication 1, dans lequel l'ensemble de blocs de ressource alloué est maintenu en l'absence de réception du message d'accusé de réception positif retransmis au niveau du noeud.

4. Procédé selon la revendication 1, dans lequel le laps de temps prédéterminé prend fin à la réception du message d'accusé de réception positif retransmis au niveau du noeud.

5. Procédé selon la revendication 1, comprenant en outre la libération de l'ensemble de blocs de ressource alloué pour le premier et le deuxième dispositifs à la fin du laps de temps prédéterminé.

6. Procédé selon l'une quelconque des revendications précédentes, comprenant en outre la transmission d'une demande depuis le premier ou le deuxième dispositif vers le noeud pour une session de communication D2D entre les dispositifs.

7. Noeud d'un réseau de télécommunications sans fil, permettant de :
recevoir soit un message d'accusé de réception positif soit un message d'accusé de réception négatif retransmis par uniquement un dispositif parmi un premier et un deuxième dispositifs, lesdits messages ayant été transmis/reçus dans une communication D2D entre le premier et le deuxième dispositifs, et étant relatifs au succès ou à l'échec d'un message de données envoyé entre le premier et le deuxième dispositifs dans la communication D2D, le noeud étant configuré pour recevoir soit uniquement les messages d'accusé de réception positif soit uniquement les messages d'accusé de réception négatif retransmis par ledit dispositif parmi le premier et le deuxième dispositifs ;
maintenir un ensemble de blocs de ressource alloué pour la communication D2D jusqu'à ce qu'intervienne l'un des événements suivants :
la réception, par le noeud, d'un message d'accusé de réception positif retransmis ;
la réception, par le noeud, d'un nombre maximal prédéterminé de messages d'accusé de réception négatif retransmis ; ou
l'expiration d'un laps de temps prédéterminé déclenché lorsque l'ensemble de blocs de ressource est alloué par le noeud.

8. Noeud selon la revendication 7, le noeud permettant de maintenir l'ensemble de blocs de ressource alloué en l'absence de réception du message d'accusé de réception positif retransmis.

9. Noeud selon la revendication 7, le noeud permettant de libérer l'ensemble de blocs de ressource alloué à la réception du message d'accusé de réception positif retransmis.

10. Réseau de télécommunications sans fil comprenant :
un noeud selon la revendication 7 et un premier et un deuxième dispositifs en communication D2D, dans lequel l'un des premier et deuxième dispositifs permet de retransmettre au noeud soit uniquement les messages d'accusé de réception positif soit uniquement les messages d'accusé de réception négatif, lesdits messages ayant été transmis/reçus dans la communication D2D entre le premier et le deuxième dispositifs, et étant relatifs au succès ou à l'échec d'un message de données envoyé entre le premier et le deuxième dispositif dans la communication D2D.

11. Produit-programme informatique, comprenant un support utilisable par un ordinateur, incorporant un code de programme lisible par un ordinateur, ledit code de programme lisible par un ordinateur étant adapté pour être exécuté afin de mettre en oeuvre un procédé destiné à réaliser une gestion de ressources pour une communication de dispositif à dispositif entre un premier et un deuxième dispositifs selon l'une quelconque des revendications 1 à 6.
